# EUROPÄISCHE PATENTSCHRIFT

(11) **EP 4 331 827 B1**
(45) Veröffentlichungstag und Bekanntmachung des Hinweises auf die Patenterteilung: **01.10.2025**
(21) Anmeldenummer: 23190028.3
(22) Anmeldetag: 07.08.2023
(51) Int. Cl.: B30B 9/02, B30B 9/12, B30B 11/22, B30B 11/24, B30B 15/14, B30B 15/16

(54) **VORRICHTUNG ZUM ENTWÄSSERN UND VERDICHTEN VON PRESSGUT SOWIE VERFAHREN ZUM BETREIBEN EINER SOLCHEN VORRICHTUNG**
DEVICE FOR DEWATERING AND COMPACTING PRESSED MATERIAL AND METHOD FOR OPERATING SUCH A DEVICE
DISPOSITIF DE DÉSHYDRATATION ET DE COMPACTAGE DE MATIÈRE À PRESSER ET PROCÉDÉ DE FONCTIONNEMENT D'UN TEL DISPOSITIF

(30) Priorität: 18.08.2022 DE 102022120864
(43) Veröffentlichungstag der Anmeldung: 06.03.2024
(73) Patentinhaber: Huber SE, 92334 Berching (DE)
(72) Erfinder: Gilch, Herbert, 92342 Freystadt (DE)
(74) Vertreter: Canzler & Bergmeier Patentanwälte Partnerschaft mbB

(56) Entgegenhaltungen:
- DE-A1- 19 902 480
- DE-A1- 3 844 465
- JP-A- S6 160 295
- US-B2- 7 828 961

## Beschreibung

Die vorliegende Erfindung betrifft ein Verfahren zum Betreiben einer Vorrichtung zum Entwässern und Verdichten von Pressgut, insbesondere von Schlamm, Rechengut oder Siebgut, das folgende Schritte umfasst: Einbringen des Pressguts in eine Pressanordnung, Antreiben einer Schneckenwelle der Pressanordnung mit einer Drehzahl mit Hilfe eines Antriebsmotors, Austreiben einer vorhandenen Flüssigkeit aus dem Pressgut mit Hilfe der Schneckenwelle, Erfassen eines durch den Antriebsmotor eingebrachtes Drehmoments und eines innerhalb der Pressanordnung herrschenden Innendrucks, und Regeln der Drehzahl der Schneckenwelle basierend auf dem Drehmoment entlang einer Drehmomentkennlinie und/oder basierend auf dem Innendruck entlang einer Druckkennlinie. Ferner betrifft die Erfindung eine Vorrichtung zum Entwässern und Verdichten von Pressgut.

Aus der DE 199 02 480 A1 ist ein Verfahren zur Regelung einer Schneckenpresse gemäss dem Oberbegriff des Anspruchs 1 bekannt, bei der die Drehzahl in Abhängigkeit des Drehmoments variiert wird. Derartige Regelungen, welche auch Drehmomentregler genannt werden können, haben den Nachteil, dass diese sehr träge bzw. zu langsam reagieren. Dadurch ist die Reaktion auf Drucksprünge, wie sie beispielsweise in der Anlaufphase oder bei Veränderungen im Schlamm auftreten können, zu langsam.

Auch sind aus dem Stand der Technik sogenannte Druckregler bekannt, welche die Drehzahl in Abhängigkeit des Innendrucks variieren können. Derartige Druckregler haben jedoch den Nachteil, dass diese zu schnell reagieren können. Dadurch kann die Reaktion auf Drucksprünge zu einer Schwingung der Regelung führen. Ohne geeignete Dämpfung würde diese Schwingung zu einem instabilen Schwingungsverhalten und gegebenenfalls zu Schäden an der Schneckenpresse führen.

Aufgabe der vorliegenden Erfindung ist es, die aus dem Stand der Technik bekannten Nachteile zu beseitigen.

Die Aufgabe wird gelöst durch ein Verfahren zum Betreiben einer Vorrichtung zum Entwässern und Verdichten von Pressgut mit den Merkmalen des Anspruchs 1 und eine Vorrichtung mit den Merkmalen des Anspruchs 12.

Vorgeschlagen wird ein Verfahren zum Betreiben einer Vorrichtung zum Entwässern und Verdichten von Pressgut, insbesondere von Schlamm, Rechengut oder Siebgut. Das Verfahren umfasst zumindest die im Folgenden beschriebene Schritte:
Das Pressgut wird zum Entwässern und Verdichten in eine Pressanordnung der Vorrichtung eingebracht. Eine Schneckenwelle der Pressanordnung wird mit Hilfe eines Antriebsmotors angetrieben, sodass sich die Schneckenwelle mit einer Drehzahl dreht. Mit Hilfe der Schneckenwelle wird aus dem Pressgut eine vorhandene Flüssigkeit ausgetrieben. Ein durch den Antriebsmotor eingebrachtes Drehmoment und ein innerhalb der Pressanordnung herrschender Innendruck wird erfasst. Basierend auf dem Drehmoment entlang einer Drehmomentkennlinie und/oder basierend auf dem Innendruck entlang einer Druckkennlinie wird die Drehzahl der Schneckenwelle geregelt.

Bei dem eingebrachten Drehmoment handelt es sich vorzugsweise um das Drehmoment des Antriebsmotors (der vorzugsweise als Elektromotor ausgebildet ist), wobei das Drehmoment beispielsweise mit Hilfe eines Drehmomentsensors oder beispielsweise indirekt durch Messung der (elektrischen) Leistung des Antriebsmotors an dessen Umrichter bestimmt bzw. überwacht wird. Alternativ könnte auch das abtriebsseitige Drehmoment eines zwischen Schneckenwelle und Antriebsmotors angeordneten Getriebes berücksichtigt werden, wobei die Berücksichtigung des Drehmoments des Antriebsmotors bevorzugt wird.

Die Vorrichtung zum Entwässern und Verdichten von Pressgut kann beispielsweise eine Schneckenpresse oder eine Waschpresse sein. Schneckenpressen oder Waschpressen werden beispielsweise in Kläranlagen verwendet. Das Pressgut kann dabei beispielsweise Schlamm, Rechengut oder Siebgut sein. Als Schlamm wird hierbei eine Suspension aus einer wässrigen Flüssigkeit und darin enthaltenen Feststoffen verstanden. Als Rechengut oder Siebgut wird der mittels eines Rechens oder eines Siebes abgetrennte Feststoff z.B. aus einer Kläranlage oder einem Abwasserkanal verstanden. Das Pressgut weist sowohl in Form von Schlamm, als auch in Form von Rechengut oder Siebgut einen erhöhten Wassergehalt auf, welcher mittels der Vorrichtung verringert wird.

Als Schneckenwelle ist eine Welle zu verstehen, die eine innenliegende Achse und zumindest eine um diese Achse erstreckende Wendel (vergleichbar zu einer archimedischen Schraube) umfasst. Der Abstand benachbarter Wendelabschnitte kann, insbesondere bei der Vorrichtung als Schneckenpresse, in Förderrichtung des Pressguts zu einer Auslassöffnung und/oder einer Austrittsöffnung hin zumindest abschnittsweise abnehmen, wodurch eine Komprimierung des Pressguts, insbesondere des Schlamms, bewirkt wird. Dreht sich die Schneckenwelle um eine Drehachse, so wird das Pressgut in Förderrichtung gefördert und die enthaltene Flüssigkeit, insbesondere das Wasser, aus dem Pressgut ausgetrieben.

Zum Einbringen des Pressguts in die Pressanordnung weist die Vorrichtung vorzugsweise eine Einlassöffnung auf. Als Einlassöffnung ist eine Öffnung zu verstehen, durch welche das Pressgut zur Pressanordnung transportiert werden kann. Das Pressgut, insbesondere als Schlamm, kann dabei durch eine Schlammzuleitung zur Vorrichtung transportiert werden.

Die Pressanordnung umfasst zusätzlich zur Schneckenwelle einen umgebenden Presskorb. Der Presskorb weist vorzugsweise wenigstens einen flüssigkeitsdurchlässigen Siebabschnitt und wenigstens einen flüssigkeitsundurchlässigen Dichtabschnitt auf. Der Presskorb umgibt die Schneckenwelle derart, dass das Pressgut beim Transport in Förderrichtung durch die sich drehende Schneckenwelle seitlich gegen den wenigstens einen Siebabschnitt und wenigstens einen Dichtabschnitt gepresst und hierbei entwässert wird, wobei die Flüssigkeit durch den wenigstens einen Siebabschnitt treten kann, während der Großteil der Feststoffe zurückgehalten wird.

Zum Auslassen der ausgetriebenen Flüssigkeit weist die Vorrichtung vorzugsweise die Auslassöffnung auf, die am Presskorb, insbesondere im Bereich des Siebabschnitts, angeordnet ist. Die mittels der Schneckenwelle aus dem Pressgut ausgetriebene Flüssigkeit wird dabei durch den Siebabschnitt gesiebt und gelangt anschließend zur Auslassöffnung. Zusätzlich kann unterhalb der Schneckenwelle eine Filtratwanne angeordnet sein, welche die ausgepresste Flüssigkeit (=Filtrat) während des Betriebs der Vorrichtung auffangen und/oder in der die Flüssigkeit zur Auslassöffnung hin transportiert werden kann.

Schließlich weist die Vorrichtung vorzugsweise die wenigstens eine AustrittsÖffnung für das mit Hilfe der Pressanordnung zumindest teilweise entwässerte Pressgut auf, wobei im Bereich der Austrittsöffnung ein Presselement vorhanden sein sollte. Vorzugsweise ist das Presselement verstellbar ausgebildet, so dass mit dessen Hilfe die Durchtrittsfläche der Austrittsöffnung veränderbar ist, um hierdurch den Gegendruck beim Pressvorgang einstellen zu können. Zusammen mit der eingebrachten Menge an Pressgut und/oder der Einbringgeschwindigkeit des Pressguts bestimmt der Gegendruck den Innendruck in der Pressanordnung. Auch das Drehmoment ist vorzugsweise von diesen Faktoren abhängig.

Wie vorstehend bereits beschrieben, werden das durch den Antriebsmotor eingebrachte Drehmoment und der innerhalb der Pressanordnung herrschende Innendruck erfasst. Anhand der Drehmomentkennlinie, welche die Verbindung bzw. Beziehung zwischen der Drehzahl und dem Drehmoment herstellt, kann die Drehzahl der Schneckenwelle in Abhängigkeit des Drehmoments geregelt werden. Dies kann auch als Drehmomentregelung bezeichnet werden. Zusätzlich oder alternativ kann anhand der Druckkennlinie, welche die Verbindung bzw. Beziehung zwischen der Drehzahl und dem Innendruck herstellt, die Drehzahl der Schneckenwelle in Abhängigkeit des Innendrucks geregelt werden. Dies kann auch als Druckregelung bezeichnet werden.

Beim erfindungsgemäßen Verfahren wird die Drehmomentkennlinie basierend auf dem Innendruck und/oder die Druckkennlinie basierend auf dem Drehmoment verändert. Dadurch kann das Regeln der Drehzahl der Schneckenwelle sowohl vom Drehmoment, als auch vom Innendruck abhängen, was zu einer schnellen und trotzdem stabilen Regelung führt. Druckänderungen können somit auf den Drehmomentregler einwirken. Zusätzlich oder alternativ können Drehmomentänderungen auf den Druckregler einwirken.

Wird die Drehmomentkennlinie basierend auf dem Innendruck verändert, so kann das träge Verhalten des Drehmomentreglers beschleunigt werden. Der Drehmomentregler wird dabei durch den Innendruck bzw. den Druckregler manipuliert. Wird die Druckkennlinie basierend auf dem Drehmoment verändert, so kann das instabile Schwingungsverhalten stabilisiert werden. Der Druckregler wird dabei durch das Drehmoment bzw. den Drehmomentregler manipuliert. Vorzugsweise wird der Druckregler simultan zum Drehmomentregler betrieben, wobei lediglich einer der Regler als der Druckregler oder der Drehmomentregler aktiv die Drehzahl der Schneckenwelle regelt. Der andere, nicht aktiv einwirkende Regler verändert bei einer Änderung des Innendrucks und/oder des Drehmoments die Kennlinie des aktiv einwirkenden Reglers.

Vorteilhaft ist es, wenn die Drehmomentkennlinie bei einer sprunghaften Veränderung des Innendrucks und/oder die Druckkennlinie bei einer sprunghaften Veränderung des Drehmoments verändert wird. Insbesondere bei der sprunghaften Veränderung des Innendrucks und/oder des Drehmoments reagiert der Drehmomentregler zu träge und/oder der Druckregler zu schnell. Die Veränderung der Drehmomentkennlinie und/oder der Druckkennlinie bei derartigen sprunghaften Veränderungen wirkt sich somit besonders vorteilhaft auf die Reaktion des Drehmomentreglers und/oder des Druckreglers aus. Derartige sprunghafte Veränderungen sind vor allem beim Anlaufen der Schneckenwelle und/oder bei Veränderungen der Pressgutzusammensetzung zu beobachten.

Ebenso bringt es Vorteile mit sich, wenn bei der Druckkennlinie einem ersten Innendruck eine erste Drehzahl und einem zweiten Innendruck eine zweite Drehzahl und/oder bei der Drehmomentkennlinie einem ersten Drehmoment eine untere Drehzahl und einem zweiten Drehmoment eine obere Drehzahl zugeordnet wird. Die Druckkennlinie des Druckreglers verläuft somit bei der Veränderung des Innendrucks vom ersten Innendruck zum zweiten Innendruck von der ersten Drehzahl zur zweiten Drehzahl. Dadurch kann die Druckkennlinie mittels wenigstens dieser Drehzahlen und Innendrücke definiert werden. Beispielsweise definieren der erste Innendruck, der zweite Innendruck, die erste Drehzahl und die zweite Drehzahl den Regelbereich des Druckreglers. Innerhalb dieses Regelbereichs wird die Drehzahl der Schneckenwelle entsprechend dem Innendruck geregelt und/oder eingestellt.

Die Drehmomentkennlinie des Drehmomentreglers verläuft bei der Veränderung des Drehmoments von dem ersten Drehmoment zum zweiten Drehmoment von der unteren Drehzahl zur oberen Drehzahl. Dadurch kann die Drehmomentkennlinie mittels wenigstens dieser Drehzahlen und Drehmomente definiert werden. Beispielsweise definieren das erste Drehmoment, das zweite Drehmoment, die untere Drehzahl und die obere Drehzahl den Regelbereich des Drehmomentreglers. Innerhalb dieses Regelbereichs wird die Drehzahl der Schneckenwelle entsprechend dem Drehmoment geregelt und/oder eingestellt.

Insbesondere ist es von Vorteil, wenn die untere Drehzahl abhängig vom Innendruck verändert wird. Die untere Drehzahl wird in diesem Fall dem Innendruck, vorzugsweise linear, nachgeführt. Wenn also der Innendruck steigt, so steigt auch die Drehzahl, die der Antrieb bei einem bestimmten Drehmoment aufweist. Ebenso fällt die Drehzahl bei einem bestimmten Drehmoment, wenn der Innendruck fällt. Die untere Drehzahl, die zusammen mit der oberen Drehzahl die Drehmomentkennlinie definiert, wird also, vorzugsweise in einem definiert begrenzten Drehzahlbereich, in Abhängigkeit des Innendrucks verändert, so dass sich in diesem Bereich auch die Drehmomentkennlinie in Abhängigkeit des Innendrucks ändert.

Alternativ ist es selbstverständlich auch denkbar, die obere Drehzahl in Abhängigkeit des Innendrucks zu verändern. Die obere Drehzahl würde in diesem Fall dem Innendruck, vorzugsweise linear, nachgeführt werden. Wenn also der Innendruck in einem definierten Drehzahlbereich steigt, so würde auch in diesem Fall die obere Drehzahl angepasst werden, die der Antrieb bei einem bestimmten Drehmoment aufweisen soll. Ebenso fällt die obere Drehzahl bei einem bestimmten Drehmoment, wenn der Innendruck fällt. Die obere Drehzahl wird also, vorzugsweise in einem definiert begrenzten Drehzahlbereich, in Abhängigkeit des Innendrucks verändert, so dass sich auch in diesem Bereich die Drehmomentkennlinie in Abhängigkeit des Innendrucks ändert.

Schließlich ist es auch möglich, sowohl die untere Drehzahl als auch die obere Drehzahl dem Innendruck nachzuführen, wobei diese Nachführung, wie auch in den beiden zuvor genannten Fällen vorzugsweise immer nur in einem in der Steuerung definierten Drehzahlbereich erfolgt. Es ist also denkbar, dass die Drehmomentkennlinie in einem bestimmten Drehzahlbereich nicht vom Innendruck abhängt und damit der ursprünglichen Drehmomentkurve entspricht.

Vorteile bringt es zudem mit sich, wenn die Drehmomentkennlinie und/oder die Druckkennlinie linear verläuft. Dies hat den Vorteil, dass mit Hilfe des ersten Innendrucks, des zweiten Innendrucks, der ersten Drehzahl und der zweiten Drehzahl die Druckkennlinie definiert werden kann, da zwischen diesen Innendrücken und Drehzahlen und auch darüberhinausgehend die Druckkennlinie linear interpoliert werden kann. Zusätzlich oder alternativ kann mithilfe des ersten Drehmoments, des zweiten Drehmoments, der unteren Drehzahl und der oberen Drehzahl die Drehmomentkennlinie definiert werden. Auch hier kann zwischen diesen Drehmomenten und Drehzahlen und auch darüberhinausgehend die Drehmomentkennlinie linear interpoliert werden.

Ebenso bringt es Vorteile mit sich, wenn bei steigendem Drehmoment und/oder steigendem Innendruck die Drehzahl erhöht wird. Durch die steigende Drehzahl kann die Fördergeschwindigkeit erhöht werden, wodurch bei steigendem Drehmoment und/oder steigendem Innendruck das entwässerte und verdichtete Pressgut beim Austreten aus der Austrittsöffnung möglichst konstante Eigenschaften besitzt.

Ebenso ist es vorteilhaft, wenn die erste Drehzahl, die zweite Drehzahl und/oder die obere Drehzahl, insbesondere manuell, vorgegeben wird. So ist die erste Drehzahl, die zweite Drehzahl und/oder die obere Drehzahl zumindest solange fixiert, bis diese, insbesondere manuell, umgestellt wird. Durch das Vorgeben der Drehzahlen wird die Drehmomentkennlinie und/oder die Druckkennlinie zumindest teilweise definiert. Zudem kann durch die manuelle Vorgabe das Verfahren bei längerfristigen Änderungen manuell umgestellt werden.

Vorteilhafterweise ist die erste Drehzahl kleiner als die zweite Drehzahl und/oder die zweite Drehzahl kleiner als die obere Drehzahl. Dadurch kann die Druckkennlinie zumindest teilweise definiert werden. Zudem kann dadurch der Regelbereich der Drehmomentkennlinie in einem höheren Drehzahlbereich als der Regelbereich der Druckkennlinie verlaufen. Somit ist die Drehzahl insbesondere beim Start der Vorrichtung bzw. in der Anlaufphase vom Innendruck abhängig. So kann ein schnelleres Anlaufen der Vorrichtung gewährleistet werden.

Vorteilhaft ist es zudem, wenn die untere Drehzahl der Drehmomentkennlinie, insbesondere bei gleichbleibendem ersten Drehmoment, in Abhängigkeit des in der Pressanordnung herrschenden Innendrucks verändert wird. Mit Hilfe der Änderung der unteren Drehzahl kann die Steigung der Drehmomentkennlinie verändert werden. Dies schafft eine einfache Möglichkeit, die Drehmomentkennlinie basierend auf dem Innendruck zu regeln und/oder zu verändern.

Auch ist es von Vorteil, wenn die untere Drehzahl der Drehmomentkennlinie basierend auf dem in der Pressanordnung herrschenden Innendruck eine variable Drehzahl zwischen der ersten Drehzahl und der zweiten Drehzahl annimmt. Aus der Druckkennlinie ergibt sich somit der Wert der unteren Drehzahl und somit der Steigung der Drehmomentkennlinie. Dadurch greift der Druckregler lediglich mittelbar durch den Drehmomentregler in den Betrieb der Vorrichtung ein. Dies hat den Vorteil, dass ausschließlich der Drehmomentregler unmittelbar die Drehzahl der Schneckenwelle regelt. Das mittelbare Regeln des Druckreglers wird somit durch den Drehmomentregler zumindest teilweise abgedämpft.

Vorteilhaft ist es, wenn für die untere Drehzahl der Drehmomentkennlinie eine Anfangsdrehzahl vorgegeben wird. So kann beim Anlauf der Vorrichtung bereits die Regelung basierend auf dem Drehmoment erfolgen, auch wenn die variable Drehzahl von der Drehzahlvorgabe des Druckreglers abhängig ist. Es muss somit nicht auf eine Drehzahlvorgabe des Druckreglers gewartet werden. Vorzugsweise ist die Anfangsdrehzahl gleich der ersten Drehzahl. Dies gewährleistet ein möglichst sanftes Anlaufen der Vorrichtung. Es ist also von Vorteil, wenn die Anfangsdrehzahl einen bestimmten, in der Steuerung hinterlegten, Betrag aufweist, wobei der Antrieb beim Anlaufen der Vorrichtung mit dieser Anfangsdrehzahl und unter Berücksichtigung der Drehmomentkennlinie betrieben wird, bis der Innendruck einen definierten Mindestbetrag erreicht oder übersteigt. Ab diesem Punkt erfolgt die Drehzahlregelung bzw. die Anpassung der Drehmomentkennlinie schließlich unter Berücksichtigung des Innendrucks.

Ebenso ist es von Vorteil, wenn ein minimaler und/oder maximaler Innendruck und/oder ein minimales und/oder maximales Drehmoment in der Steuerung definiert sind. Wird das minimale Drehmoment unterschritten, so bleibt die Drehzahl konstant auf der oben genannten unteren Drehzahl. Wird das maximale Drehmoment überschritten, so bleibt die Drehzahl konstant auf der oben genannten oberen Drehzahl. Wird der minimale Innendruck unterschritten, so bleibt die Drehzahl konstant auf der oben genannten ersten Drehzahl. Wird der maximale Innendruck überschritten, so bleibt die Drehzahl konstant auf der oben genannten zweiten Drehzahl.

Vorteile bringt es zudem mit sich, wenn der erste Innendruck, der zweite Innendruck, das erste Drehmoment und/oder das zweite Drehmoment, insbesondere manuell, vorgegeben wird. Dadurch wird die Druckkennlinie und/oder die Drehmomentkennlinie zumindest teilweise definiert. Zudem kann durch die manuelle Vorgabe das Verfahren bei längerfristigen Änderungen manuell umgestellt werden. Vorteilhafterweise ist der erste Innendruck kleiner als der zweite Innendruck und/oder das erste Drehmoment kleiner als das zweite Drehmoment.

Des Weiteren ist es vorteilhaft, wenn wenigstens eine der folgenden Drehzahlen, Drehmomente und/oder Innendrücke vorgegeben wird:
- erste Drehzahl von 0,01 1/min bis 10,00 1/min, vorzugsweise von 0,05 1/min bis 2,00 1/min;
- zweite Drehzahl von 0,1 1/min bis 20,0 1/min, vorzugsweise von 0,2 1/min bis 5,0 1/min;
- Anfangsdrehzahl der unteren Drehzahl von 0,01 1/min bis 10,00 1/min, vorzugsweise von 0,05 1/min bis 2,00 1/min;
- obere Drehzahl von 0,1 1/min bis 20,0 1/min, vorzugsweise von 0,2 1/min bis 5,0 1/min;
- erstes Drehmoment von 0 Nm bis 15 Nm, vorzugsweise von 0 Nm bis 10 Nm;
- zweites Drehmoment von 1 Nm bis 30 Nm, vorzugsweise von 1 Nm bis 20 Nm;
- erster Innendruck von 1 mbar bis 500 mbar, vorzugsweise von 1 mbar bis 300 mbar, und/oder
- zweiter Innendruck von 1 mbar bis 1500 mbar, vorzugsweise von 1 mbar bis 600 mbar.

Mit den oben genannten Werten ist ein besonders stabiler Betrieb der Vorrichtung möglich.

Auch ist es vorteilhaft, wenn beim Regeln der Drehzahl der Schneckenwelle basierend auf dem Drehmoment eine Drehmomentdämpfung und/oder basierend auf dem Innendruck eine Innendruckdämpfung die Drehzahländerung dämpft. Dadurch kann die Regelung zusätzlich gedämpft werden. Des Weiteren kann die Regelung durch Vorgabe der Drehmomentdämpfung und/oder der Innendruckdämpfung verändert werden. Eine derartige Dämpfung kann beispielsweise einen zeitlichen Versatz der Regelung bewirken. Dadurch kann das Verfahren bei Bedarf stabilisiert werden.

Ferner wird eine Vorrichtung zum Entwässern und Verdichten von Pressgut, insbesondere von Schlamm, Rechengut oder Siebgut vorgeschlagen. Die Vorrichtung weist eine Pressanordnung auf, mit deren Hilfe das Pressgut beim Betrieb der Vorrichtung einem Pressvorgang unterzogen wird, bei dem mit Hilfe einer drehenden Schneckenwelle ein Innendruck innerhalb der Pressanordnung erzeugt und so in dem Pressgut vorhandene Flüssigkeit aus dem Pressgut ausgetrieben wird. Zudem weist die Vorrichtung einen Antriebsmotor auf, mit dessen Hilfe ein Drehmoment auf die Schneckenwelle übertragen wird. Des Weiteren umfasst die Vorrichtung eine Regeleinheit, die einen Drehmomentregler zum Regeln der Drehzahl der Schneckenwelle basierend auf dem Drehmoment entlang einer Drehmomentkennlinie und/oder einen Druckregler zum Regeln der Drehzahl der Schneckenwelle basierend auf dem Innendruck entlang einer Druckkennlinie.

Erfindungsgemäß ist die Regeleinheit ausgebildet, die Drehmomentkennlinie basierend auf dem Innendruck und/oder die Druckkennlinie basierend auf dem Drehmoment zu verändern. Durch die erfindungsgemäße Regeleinheit kann das Regeln der Drehzahl der Schneckenwelle sowohl von Drehmoment, als auch vom Innendruck abhängen, was zu einer schnellen und trotzdem stabilen Regelung führt. Druckänderungen können somit auf den Drehmomentregler einwirken. Zusätzlich oder alternativ können Drehmomentänderungen auf den Druckregler einwirken.

Vorteilhaft ist es, wenn die Vorrichtung gemäß der vorangegangenen und/oder nachfolgenden Beschreibung ausgebildet ist, wobei die genannten Merkmale einzeln oder in beliebiger Kombination vorhanden sein können.

Zudem ist es von Vorteil, wenn die Vorrichtung und/oder die Regeleinheit wenigstens eine Vorgabeeinrichtung (z.B. eine HMI) zum Vorgeben einer ersten Drehzahl, einer zweiten Drehzahl, einer unteren Drehzahl, einer oberen Drehzahl, eines ersten Innendrucks, eines zweiten Innendrucks, eines ersten Drehmoments und/oder eines zweiten Drehmoments aufweist. Mit der Vorgabeeinrichtung kann eine einfache Einrichtung geschaffen werden, mittels welcher die einzelnen Regelparameter der Regeleinheit vorgegeben und/oder manuell eingegeben werden können.

Die Vorrichtung umfasst wenigstens eine Messeinrichtung zum Messen der Drehzahl, des Drehmoments und/oder des Innendrucks. Hierfür ist es vorteilhaft, wenn die Messeinrichtung wenigstens einen Drehzahlsensor, einen Drehmomentsensor und/oder einen Drucksensor aufweist. Die Messeinrichtung kann somit alle notwendigen Messgrößen zur Regelung der Vorrichtung liefern.

Weitere Vorteile der Erfindung sind in dem nachfolgenden Ausführungsbeispiel beschrieben. Es zeigt:

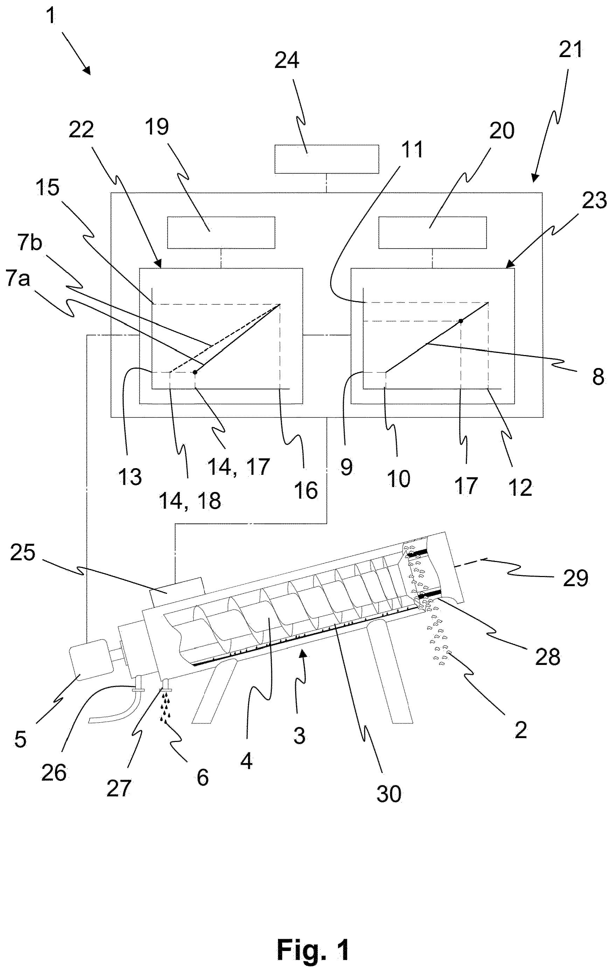

- **Figur 1**: eine schematische, teilweise geschnittene Seitenansicht einer Vorrichtung zum Entwässern und Verdichten von Pressgut sowie ausgewählte Diagramme zur Verdeutlichung der Erfindung.

Die einzige Figur 1 zeigt eine schematische, teilweise geschnittene Seitenansicht einer Vorrichtung zum Entwässern und Verdichten von Pressgut. Als Vorrichtung 1 zum Entwässern und Verdichten von Pressgut 2 ist hierbei eine Schneckenpresse dargestellt. Die Vorrichtung 1 ist über eine entsprechende Tragstruktur (zu der neben den gezeigten Standbeinen auch verschiedene Längs- und/oder Querträger oder auch sonstige Rahmenelemente zählen können) gelagert. Zum Einbringen des Pressguts 2 weist die Vorrichtung 1 eine Einlassöffnung 26 auf. Die Einlassöffnung 26 kann beispielsweise mit einer Schlammzuleitung verbunden sein über den beispielsweise der Schlamm als Pressgut 2 eingebracht werden kann.

Im Anschluss an die Einlassöffnung 26 erstreckt sich eine Pressanordnung 3, die eine von einem Antriebsmotor 5 in eine Drehbewegung um eine Drehachse 29 versetzbare Schneckenwelle 4 umfasst, die wiederum vorzugsweise eine Achse mit einer oder mehreren darum angeordneten Wendeln aufweist und von einem Presskorb 30 umgeben ist. Der Presskorb 30 weist wenigstens einen nicht gezeigten flüssigkeitsdurchlässigen Siebabschnitt auf, durch den eine Flüssigkeit 6 des Pressguts 2 hindurch austreten kann. Beispielsweise wird die Flüssigkeit 6 anschließend mit Hilfe wenigstens einer Filtratwanne aufgefangen.

Beim Fördern des Pressguts 2 entlang der Förderrichtung wird das Pressgut 2 aufgrund der Presswirkung zwischen Schneckenwelle 4 und Presskorb 30 entwässert. Durch die sich ändernde, vorzugsweise abnehmende, Steigung der Wendel und/oder deren sich in Richtung einer Austrittsöffnung eventuell ändernden, vorzugsweise vergrößernden, Außendurchmesser der Achse wird das Pressgut 2 schließlich zusammen- und von innen gegen den Presskorb 30 gepresst, wodurch es zum Austritt der Flüssigkeit 6 durch Durchbrechungen (Löcher oder Schlitze) des Presskorbs 30 kommt. Dadurch wird die im Pressgut 2 vorhandene Flüssigkeit 6 ausgebtrieben.

Zur Unterstützung des Pressvorgangs besitzt die Pressanordnung 3 vorzugsweise eine Gegenfläche, beispielsweise in Form des gezeigten Presskonus. Der Presskonus befindet sich hierbei im oberen Endbereich der Schneckenwelle 4 und bildet mit einer korrespondierenden Außenwandung bzw. dem Presskorb 30 einen ringförmigen Spalt, der von dem entwässerten Pressgut 2, insbesondere Schlamm, passiert werden kann. Durch die Verstellung des Presskonus in Axialrichtung der Schneckenwelle 4 kann schließlich der genannte Spalt verändert und damit der Gegendruck während des Pressvorgangs angepasst werden (hierfür sind beispielsweise eine oder mehrere, beispielsweise pneumatisch betätigbare, Verstellelemente vorhanden). Dies kann zu einer Änderung des Innendrucks innerhalb der Pressanordnung 3 führen.

Die Flüssigkeit 6 wird, wie vorstehend bereits beschrieben, schließlich von der wenigstens einen unterhalb der Schneckenwelle 4 angeordneten Filtratwanne aufgefangen und in Richtung einer Auslassöffnung 27 geführt. Dort kann sie z. B. mit Hilfe einer nicht gezeigten Schlauchanordnung abgeführt oder mit Hilfe einer Auffangvorrichtung aufgefangen werden. Im Gegenzug wird das zu entwässernde und verdichtende Pressgut 2 mithilfe der Schneckenwelle 4 von der Einlassöffnung 26 in Richtung der Austrittsöffnung 28 gefördert und dabei entwässert, bis es als entwässertes Pressgut 2 die Austrittsöffnung 28 erreicht. Aus Übersichtsgründen ist das zu entwässernde und verdichtende Pressgut 2, welches sich zwischen der Schneckenwelle 4 und dem Presskorb 30 befindet, nicht gezeigt. Lediglich das aus der Austrittsöffnung 28 austretende entwässerte Pressgut 2 ist dargestellt.

Beim Betreiben der Vorrichtung 1 wird mit Hilfe des Antriebsmotors 5 die Schneckenwelle 4 mit einer Drehzahl angetrieben. Hierfür bringt der Antriebsmotor 5 ein Drehmoment ein. Das Drehmoment und die Drehzahl werden über den Antriebsmotor 5 und/oder über eine Messeinrichtung 25 erfasst. Zudem ist die Messeinrichtung 25 dazu ausgebildet, den in der Pressanordnung 3 herrschende Innendruck zu erfassen. Hierfür kann die Messeinrichtung 25 einen Drehzahlsensor, einen Drehmomentsensor und/oder einen Drucksensor aufweisen. Aus Übersichtsgründen sind die einzelnen Sensoren nicht dargestellt, jedoch ist es vorstellbar, dass der Drehzahlsensor und/oder der Drehmomentsensor am Antriebsmotor 5 und/oder zwischen dem Antriebsmotor 5 und der Schneckenwelle 4 angeordnet ist. Der Drucksensor kann dabei vorzugsweise innerhalb des Presskorbs 30 angeordnet sein.

Die Drehzahl der Schneckenwelle 4 wird basierend auf einer Drehmomentkennlinie 7a, 7b und/oder auf eine Druckkennlinie 8 geregelt. Die Drehzahl der Schneckenwelle 4 wird somit derart geregelt, dass diese im Falle der Regelung basierend auf der Drehmomentkennlinie 7a, 7b bei einem bestimmten Drehmoment eine zugeordnete Drehzahl annimmt. Im Falle der Druckkennlinie 8 nimmt die Drehzahl der Schneckenwelle 4 bei einem bestimmten Innendruck eine zugeordnete Drehzahl ein. Hierfür weist die erfindungsgemäße Vorrichtung 1 im gezeigten Ausführungsbeispiel eine Regeleinheit 21 auf. Die Regeleinheit 21 umfasst dabei einen Drehmomentregler 22 zum Regeln der Drehzahl der Schneckenwelle 4 basierend auf dem Drehmoment entlang der Drehmomentkennlinie 7a, 7b und/oder einen Druckregler 23 zum Regeln der Drehzahl der Schneckenwelle 4 basierend auf dem Innendruck entlang der Druckkennlinie 8.

Um ein stabileres Verhalten zu erhalten, wird die Drehmomentkennlinie 7a, 7b basierend auf dem Innendruck und/oder die Druckkennlinie 8 basierend auf dem Drehmoment verändert. Hierfür kann beispielsweise der Druckregler 23 derart auf den Drehmomentregler 22 einwirken, dass die Drehmomentkennlinie 7a, 7b verändert wird. Dieses Verhalten bei Veränderungen wird nachfolgend näher erläutert. Der Drehmomentregler 22 regelt dabei unmittelbar die Drehzahl der Schneckenwelle 4. Der Druckregler 23 ist in diesem Anwendungsbeispiel lediglich zur Veränderung der Drehmomentkennlinie 7a, 7b ausgebildet und wirkt somit lediglich mittelbar über den Drehmomentregler 22 auf die Drehzahl der Schneckenwelle 4 ein. Ebenfalls ist es vorstellbar, dass der Drehmomentregler 22 mittelbar über den Druckregler 23 auf die Drehzahl einwirkt.

Sowohl die Drehmomentkennlinie 7a, 7b als auch die Druckkennlinie 8 verlaufen im gezeigten Ausführungsbeispiel vorteilhafterweise linear. Bei der Druckkennlinie 8 wird einem ersten Innendruck 9 eine erste Drehzahl 10 und einem zweiten Innendruck 11 eine zweite Drehzahl 12 zugeordnet. Der Bereich zwischen diesen zugeordneten Werten kann Regelbereich des Druckreglers 23 genannt werden. Ähnlich verhält es sich bei der Drehmomentkennlinie 7a, 7b, bei welcher einem ersten Drehmoment 13 eine untere Drehzahl 14 und einem zweiten Drehmoment 15 eine obere Drehzahl 16 zugeordnet wird. Dieser Bereich kann Regelbereich des Drehmomentreglers 22 genannt werden. Wie die Drehmomentkennlinie 7a, 7b und die Druckkennlinie 8 zeigen, wird bei steigendem Drehmoment und/oder bei steigendem Innendruck die Drehzahl erhöht.

Zum, insbesondere manuellen, Vorgeben der ersten Drehzahl 10, der zweiten Drehzahl 12, der unteren Drehzahl 14, der oberen Drehzahl 16, des ersten Innendrucks 9, des zweiten Innendrucks 11, des ersten Drehmoments 13 und/oder des zweiten Drehmoments 15 weist die Vorrichtung 1 wenigstens eine Vorgabeeinrichtung 24 auf.

Um mit dem Druckregler 23 auf den Drehmomentregler 22 einwirken zu können, ist im gezeigten Ausführungsbeispiel beispielsweise die untere Drehzahl 14 des Drehmomentreglers 22 als variable Drehzahl 17 ausgebildet. Die untere Drehzahl 14 als variable Drehzahl 17 wird somit in Abhängigkeit des Innendrucks verändert. In diesem Fall kann anstatt der unteren Drehzahl 14 mittels der Vorgabeeinrichtung 24 eine Anfangsdrehzahl 18 für die untere Drehzahl 14 vorgegeben werden. Im Verlauf des Betreibens der Vorrichtung 1 kann sich die Anfangsdrehzahl 18 in die variable Drehzahl 17 als untere Drehzahl 14 verändern. Beispielsweise kann dabei als Anfangsdrehzahl 18 die erste Drehzahl 10 des Druckreglers 23 verwendet werden.

So wird mit Hilfe der Messeinrichtung 25 der Innendruck innerhalb der Pressanordnung 3 gemessen und an die Regeleinrichtung weitergegeben. Mithilfe des Innendrucks wird durch den Druckregler 23 die zugeordnete Drehzahl für den gemessenen Innendruck bestimmt. Diese zugeordnete Drehzahl für den gemessenen Innendruck wird an den Drehmomentregler 22 weitergegeben und basierend auf dieser Drehzahl die untere Drehzahl 14 verändert. Im gezeigten Ausführungsbeispiel wird diese zugeordnete Drehzahl als variable Drehzahl 17 an den Drehmomentregler 22 weitergegeben. Vorzugsweise nimmt die untere Drehzahl 14 des Drehmomentreglers 22 anschließend die variable Drehzahl 17 an. Im dargestellten Ausführungsbeispiel sind zwei Drehmomentkennlinien 7a, 7b dargestellt, um die Änderung von der Anfangsdrehzahl 18 zur variable Drehzahl 17 zu verdeutlichen. Die Drehmomentkennlinie 7b basiert dabei auf der Anfangsdrehzahl 18 und ist als Strichlinie dargestellt. Die Drehmomentkennlinie 7a basiert auf der variablen Drehzahl 17, die vom Druckregler 23 an den Drehmomentregler 22 weitergegeben wird. Die Drehmomentkennlinie 7a ist als Volllinie dargestellt.

Wie aus der Druckkennlinie 8 und der Drehmomentkennlinie 7a, 7b ersichtlich, ist die erste Drehzahl 10 kleiner als die zweite Drehzahl 12. Die untere Drehzahl 14 der Drehmomentkennlinie 7a ist als variable Drehzahl 17 größer oder gleich der ersten Drehzahl 10 und kleiner oder gleich der zweiten Drehzahl 12, da diese vom Innendruck abhängig ist. Die obere Drehzahl 16 ist hingegen stets größer als die erste Drehzahl 10, die zweite Drehzahl 12 und die untere Drehzahl 14. Durch das Einwirken auf die Steigung der Drehmomentkennlinie 7a, 7b wirkt sich der Innendruck jedoch über den kompletten Drehzahlbereich (und nicht nur den begrenzten Drehzahlbereich des Druckreglers) auf die Regelung aus. Somit wird bei einer Erhöhung des Innendrucks die lineare Drehmomentkennlinie 7a, 7b steiler. Dies entspricht der Änderung von der Drehmomentkennlinie 7b zur Drehmomentkennlinie 7a. Bei einer Verringerung des Innendrucks wird die lineare Drehmomentkennlinie 7a, 7b flacher. Dies entspricht der Änderung von der Drehmomentkennlinie 7a zur Drehmomentkennlinie 7b.

Zum Dämpfen der Drehzahländerung kann sowohl der Drehmomentregler 22 mittels einer Drehmomentdämpfung 19, als auch der Druckregler 23 mittels einer Innendruckdämpfung 20 gedämpft werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Vorrichtung
- 2: Pressgut
- 3: Pressanordnung
- 4: Schneckenwelle
- 5: Antriebsmotor
- 6: Flüssigkeit
- 7a, 7b: Drehmomentkennlinie
- 8: Druckkennlinie
- 9: erster Innendruck
- 10: erste Drehzahl
- 11: zweiter Innendruck
- 12: zweite Drehzahl
- 13: erstes Drehmoment
- 14: untere Drehzahl
- 15: zweites Drehmoment
- 16: obere Drehzahl
- 17: variable Drehzahl
- 18: Anfangsdrehzahl
- 19: Drehmomentdämpfung
- 20: Innendruckdämpfung
- 21: Regeleinheit
- 22: Drehmomentregler
- 23: Druckregler
- 24: Vorgabeeinrichtung
- 25: Messeinrichtung
- 26: Einlassöffnung
- 27: Auslassöffnung
- 28: Austrittsöffnung
- 29: Drehachse
- 30: Presskorb

## Patentansprüche

1. Verfahren zum Betreiben einer Vorrichtung (1) zum Entwässern und Verdichten von Pressgut (2), insbesondere von Schlamm, Rechengut oder Siebgut, das folgende Schritte umfasst:
- Einbringen des Pressguts (2) in eine Pressanordnung (3),
- Antreiben einer Schneckenwelle (4) der Pressanordnung (3) mit einer Drehzahl mit Hilfe eines Antriebsmotors (5),
- Austreiben einer vorhandenen Flüssigkeit (6) aus dem Pressgut (2) mit Hilfe der Schneckenwelle (4),
- Erfassen eines durch den Antriebsmotor (5) eingebrachten Drehmoments und eines innerhalb der Pressanordnung (3) herrschenden Innendrucks, und
- Regeln der Drehzahl der Schneckenwelle (4) basierend auf dem Drehmoment entlang einer Drehmomentkennlinie (7a, 7b) und/oder basierend auf dem Innendruck entlang einer Druckkennlinie (8),
**dadurch gekennzeichnet,**
**dass** die Drehmomentkennlinie (7a, 7b) basierend auf dem Innendruck und/oder die Druckkennlinie (8) basierend auf dem Drehmoment verändert wird.

2. Verfahren nach dem vorangegangenen Anspruch, **dadurch gekennzeichnet,**
**dass** bei der Druckkennlinie (8) einem ersten Innendruck (9) eine erste Drehzahl (10) und einem zweiten Innendruck (11) eine zweite Drehzahl (12) und/oder
bei der Drehmomentkennlinie (7a, 7b) einem ersten Drehmoment (13) eine untere Drehzahl (14) und einem zweiten Drehmoment (15) eine obere Drehzahl (16) zugeordnet wird.

3. Verfahren nach einem der vorangegangenen Ansprüche, **dadurch gekennzeichnet,**
**dass** die Drehmomentkennlinie (7a, 7b) und/oder die Druckkennlinie (8) linear verläuft.

4. Verfahren nach einem der vorangegangenen Ansprüche, **dadurch gekennzeichnet,**
**dass** bei steigendem Drehmoment und/oder steigendem Innendruck die Drehzahl erhöht wird.

5. Verfahren nach Anspruch 2, **dadurch gekennzeichnet,**
**dass** die erste Drehzahl (10), die zweite Drehzahl (12) und/oder die obere Drehzahl (16), insbesondere manuell, vorgegeben wird,
wobei vorzugsweise die erste Drehzahl (10) kleiner als die zweite Drehzahl (12) und/oder die zweite Drehzahl (12) kleiner als die obere Drehzahl (16) ist.

6. Verfahren nach Anspruch 2, **dadurch gekennzeichnet,**
**dass** die untere Drehzahl (14) der Drehmomentkennlinie (7a, 7b), insbesondere bei gleichbleibendem ersten Drehmoment (13), in Abhängigkeit des in der Pressanordnung (3) herrschenden Innendrucks verändert wird.

7. Verfahren nach Anspruch 2, **dadurch gekennzeichnet,**
**dass** die untere Drehzahl (14) der Drehmomentkennlinie (7a, 7b) basierend auf dem in der Pressanordnung (3) herrschenden Innendruck eine variable Drehzahl (17) zwischen der ersten Drehzahl (10) und der zweiten Drehzahl (12) annimmt.

8. Verfahren nach einem der vorangegangenen Ansprüche, **dadurch gekennzeichnet,**
**dass** für die untere Drehzahl (14) der Drehmomentkennlinie (7a, 7b) eine Anfangsdrehzahl (18) vorgegeben wird.

9. Verfahren nach Anspruch 2, **dadurch gekennzeichnet,**
**dass** der erste Innendruck (9), der zweite Innendruck (11), das erste Drehmoment (13) und/oder das zweite Drehmoment (15), insbesondere manuell, vorgegeben wird,
wobei vorzugsweise der erste Innendruck (9) kleiner als der zweite Innendruck (11) und/oder das erste Drehmoment (13) kleiner als das zweite Drehmoment (15) ist.

10. Verfahren nach einem der Ansprüche 2 oder 9, **dadurch gekennzeichnet,**
**dass** wenigstens eine der folgenden Drehzahlen, Drehmomente und/oder Innendrücke vorgegeben wird:
- erste Drehzahl (10) von 0,01 1/min bis 10,00 1/min, vorzugsweise von 0,05 1/min bis 2,00 1/min;
- zweite Drehzahl (12) von 0,1 1/min bis 20,0 1/min, vorzugsweise von 0,2 1/min bis 5,0 1/min;
- Anfangsdrehzahl (18) der unteren Drehzahl (14) von 0,01 1/min bis 10,00 1/min, vorzugsweise von 0,05 1/min bis 2,00 1/min;
- obere Drehzahl (16) von 0,1 1/min bis 20,0 1/min, vorzugsweise von 0,2 1/min bis 5,0 1/min;
- erstes Drehmoment (13) von 0 Nm bis 15 Nm, vorzugsweise von 0 Nm bis 10 Nm;
- zweites Drehmoment (15) von 1 Nm bis 30 Nm, vorzugsweise von 1 Nm bis 20 Nm;
- erster Innendruck (9) von 1 mbar bis 500 mbar, vorzugsweise von 1 mbar bis 300 mbar, und/oder
- zweiter Innendruck (11) von 1 mbar bis 1500 mbar, vorzugsweise von 1 mbar bis 600 mbar.

11. Verfahren nach einem der vorangegangenen Ansprüche, **dadurch gekennzeichnet,**
**dass** beim Regeln der Drehzahl der Schneckenwelle (4) basierend auf dem Drehmoment eine Drehmomentdämpfung (19) und/oder basierend auf dem Innendruck eine Innendruckdämpfung (20) die Drehzahländerung dämpft.

12. Vorrichtung (1) zum Entwässern und Verdichten von Pressgut (2), insbesondere von Schlamm, Rechengut oder Siebgut,
- mit einer Pressanordnung (3), mit deren Hilfe das Pressgut (2) beim Betrieb der Vorrichtung (1) einem Pressvorgang unterzogen wird,
bei dem mit Hilfe einer drehenden Schneckenwelle (4) ein Innendruck innerhalb der Pressanordnung (3) erzeugt und so in dem Pressgut (2) vorhandene Flüssigkeit (6) aus dem Pressgut (2) ausgetrieben wird,
- mit einem Antriebsmotor (5), mit dessen Hilfe ein Drehmoment auf die Schneckenwelle (4) übertragen wird, und
- mit wenigstens einer Messeinrichtung (25),
wobei das Drehmoment und die Drehzahl über den Antriebsmotor (5) und/oder über die Messeinrichtung (25) und der Innendruck über die Messeinrichtung (25) erfasst werden, und
- mit einer Regeleinheit (21), die einen Drehmomentregler (22) zum Regeln der Drehzahl der Schneckenwelle (4) basierend auf dem Drehmoment entlang einer Drehmomentkennlinie (7a, 7b) und/oder einen Druckregler (23) zum Regeln der Drehzahl der Schneckenwelle (4) basierend auf dem Innendruck entlang einer Druckkennlinie (8), aufweist,
**dadurch gekennzeichnet,**
**dass** die Regeleinheit (21) ausgebildet ist, die Drehmomentkennlinie (7a, 7b) basierend auf dem Innendruck und/oder die Druckkennlinie (8) basierend auf dem Drehmoment zu verändern.

13. Vorrichtung (1) nach dem vorangegangenen Anspruch, **dadurch gekennzeichnet,**
**dass** die Regeleinheit (21) ausgebildet ist, die Vorrichtung (1) gemäß einem der Ansprüche 1 bis 11 zu betreiben.

14. Vorrichtung (1) nach Anspruch 12 oder 13, **dadurch gekennzeichnet, dass** die Vorrichtung (1) und/oder die Regeleinheit (21) wenigstens eine Vorgabeeinrichtung (24) zum Vorgeben einer ersten Drehzahl (10), einer zweiten Drehzahl (12), einer unteren Drehzahl (14), einer oberen Drehzahl (16), eines ersten Innendrucks (9), eines zweiten Innendrucks (11), eines ersten Drehmoments (13) und/oder eines zweiten Drehmoments (15) aufweist.

## Claims

1. A method for operating a device (1) for the dewatering and volume reduction of material (2) to be pressed, in particular sludge, screenings or sieved material, the method including the following steps:
- introducing the material (2) to be pressed into a pressing arrangement (3),
- driving a screw shaft (4) of the pressing arrangement (3) at a rotational speed by means of a drive motor (5),
- expelling an existing liquid (6) out of the material (2) to be pressed by means of the screw shaft (4),
- detecting a torque applied by the drive motor (5) and an internal pressure prevailing within the pressing arrangement (3), and
- controlling the rotational speed of the screw shaft (4) on the basis of the torque along a torque characteristic curve (7a, 7b) and/or on the basis of the internal pressure along a pressure curve (8),
**characterized in that** the torque characteristic curve (7a, 7b) is changed on the basis of the internal pressure and/or the pressure curve (8) is changed on the basis of the torque.

2. The method according to the preceding claim, **characterized in that** with respect to the pressure characteristic curve (8), a first internal pressure (9) is assigned a first rotational speed (10) and a second internal pressure (11) is assigned a second rotational speed (12) and/or,
with respect to the torque characteristic curve (7a, 7b) a first torque (13) is assigned a lower speed (14) and a second torque (15) is assigned an upper speed (16).

3. The method according to one of the preceding claims, **characterized in that** the torque characteristic curve (7a, 7b) and/or the pressure curve (8) extend(s) linearly.

4. The method according to one of the preceding claims, **characterized in that** the rotational speed is increased when the torque and/or internal pressure is being increased.

5. The method of claim 2, **characterized in that** the first rotational speed (10), the second rotational speed (12) and/or the upper rotational speed (16) is specified, in particular manually,
wherein preferably the first rotational speed (10) is less than the second rotational speed (12) and/or the second rotational speed (12) is less than the upper rotational speed (16).

6. The method of claim 2, **characterized in that** the lower rotational speed (14) of the torque characteristic curve (7a, 7b), in particular at a constant first torque (13), is changed as a function of the internal pressure prevailing in the pressing arrangement (3).

7. The method of claim 2, **characterized in that** the lower rotational speed (14) of the torque characteristic curve (7a, 7b) assumes a variable rotational speed (17) between the first rotational speed (10) and the second rotational speed (12) on the basis of the internal pressure prevailing in the pressing arrangement (3).

8. The method according to one of the preceding claims, **characterized in that** an initial rotational speed (18) is specified for the lower rotational speed (14) of the torque characteristic curve (7a, 7b).

9. The method of claim 2, **characterized in that** the first internal pressure (9), the second internal pressure (11), the first torque (13) and/or the second torque (15) is specified, in particular manually,
wherein preferably the first internal pressure (9) is lower than the second internal pressure (11) and/or the first torque (13) is lower than the second torque (15).

10. The method according to one of claims 2 or 9, **characterized in that** at least one of the following rotational speeds, torques and/or internal pressures is specified:
- first rotational speed (10) of 0.01 1/min to 10.00 1/min, preferably of 0.05 1/min to 2,00 1/min;
- second rotational speed (12) of 0.1 1/min to 20.0 1/min, preferably of 0.2 1/min to 5.0 1/min;
- initial rotational speed (18) of the lower rotational speed (14) of 0.01 1/min to 10.00 1/min, preferably of 0.05 1/min to 2.00 1/min;
- upper rotational speed (16) of 0.1 1/min to 20.0 1/min, preferably of 0.2 /min to 5.0 1/min;
- first torque (13) of 0 Nm to 15 Nm, preferably of 0 Nm to 10 Nm;
- second torque (15) of 1 Nm to 30 Nm, preferably of 1 Nm to 20 Nm;
- first internal pressure (9) of 1 mbar to 500 mbar, preferably 1 mbar to 300 mbar, and/or
- second internal pressure (11) of 1 mbar to 1500 mbar, preferably 1 mbar to 600 mbar.

11. The method according to one of the preceding claims, **characterized in that** a torque damping (19) damps the rotational speed change when the rotational speed of the screw shaft (4) is controlled on the basis of the torque and/or an internal pressure damping (20) damps the rotational speed change when the rotational speed of the screw shaft (4) is controlled on the basis of the internal pressure.

12. A device (1) for the dewatering and volume reduction of material (2) to be pressed, in particular sludge, screenings or sieved material,
With a pressing arrangement (3), with the aid of which a compacting operation is performed on the material (2) to be pressed during operation of the device (1),
wherein during the compacting operation, an internal pressure is generated within the pressing arrangement (3) by means of a rotating screw shaft (4) and, in this way, liquid (6) present in the material (2) to be pressed is expelled out of the material (2) to be pressed,
with a drive motor (5) configured and disposed to transmit a torque onto the screw shaft (4), and
with at least one measuring device (25), wherein the torque and the rotational speed are detected via the drive motor (5) and/or via the measuring device (25) and the internal pressure is detected via the measuring device (25), and
with a control unit (21), which has a torque controller (22) for controlling the rotational speed of the screw shaft (4) on the basis of the torque along a torque characteristic curve (7a, 7b) and/or
which has a pressure controller (23) for controlling the rotational speed of the screw shaft (4) based on the internal pressure along a pressure characteristic curve (8),
**characterized in that** the control unit (21) is designed to change the torque characteristic curve (7a, 7b) on the basis of the internal pressure and/or the pressure characteristic curve (8) on the basis of the torque.

13. The device (1) according to the preceding claim, **characterized in that** the control unit (21) is designed to operate the device (1) according to one of claims 1 to 11.

14. The device (1) according to one of claims 12 or 13, **characterized in that** the device (1) and/or the control unit (21) comprises at least one presetting device (24) for setting a first rotational speed (10), a second rotational speed (12), a lower rotational speed (14), an upper rotational speed (16), a first internal pressure (9), a second internal pressure (11), a first torque (13) and/or a second torque (15).

## Revendications

1. Procédé pour faire fonctionner un dispositif (1) pour déshydrater et compacter une matière à presser (2), en particulier une boue, une matière à râper ou une matière à tamiser, comprenant les étapes consistant à :
- introduire la matière à presser (2) dans un agencement de pressage (3),
- entraîner un arbre à vis sans fin (4) de l'agencement de pressage (3) à une vitesse de rotation à l'aide d'un moteur d'entraînement (5),
- expulser un liquide (6) présent de la matière à presser (2) à l'aide de l'arbre à vis sans fin (4),
- détecter un torque introduit par le moteur d'entraînement (5) et une pression interne régnant à l'intérieur de l'agencement de pressage (3), et
- réguler la vitesse de rotation de l'arbre à vis sans fin (4) sur la base du torque le long d'une courbe caractéristique de torque (7a, 7b) et/ou sur la base de la pression interne le long d'une courbe caractéristique de pression (8),
**caractérisé en ce que**
la courbe caractéristique de torque (7a, 7b) est modifiée sur la base de la pression interne et/ou la courbe caractéristique de pression (8) est modifiée sur la base du torque.

2. Procédé selon la revendication précédente, **caractérisé en ce que** pour la courbe caractéristique de pression (8), une première vitesse de rotation (10) est associée à une première pression interne (9) et une deuxième vitesse de rotation (12) est associée à une deuxième pression interne (11) et/ou
pour la courbe caractéristique de torque (7a, 7b), une vitesse de rotation inférieure (14) est associée à un premier torque (13) et une vitesse de rotation supérieure (16) est associée à un deuxième torque (15).

3. Procédé selon l'une des revendications précédentes, **caractérisé en ce que**
la courbe caractéristique de torque (7a, 7b) et/ou la courbe caractéristique de pression (8) est linéaire.

4. Procédé selon l'une des revendications précédentes, **caractérisé en ce que**
lorsque le torque augmente et/ou lorsque que la pression interne augmente, la vitesse de rotation est augmentée.

5. Procédé selon la revendication 2, **caractérisé en ce que**
la première vitesse de rotation (10), la deuxième vitesse de rotation (12) et/ou la vitesse de rotation supérieure (16) est prédéterminée, en particulier manuellement,
la première vitesse de rotation (10) étant de préférence inférieure à la deuxième vitesse de rotation (12) et/ou la deuxième vitesse de rotation (12) étant inférieure à la vitesse de rotation supérieure (16).

6. Procédé selon la revendication 2, **caractérisé en ce que**
la vitesse de rotation inférieure (14) de la courbe caractéristique de torque (7a, 7b) est modifiée, en particulier lorsque le premier torque (13) reste constant, en fonction de la pression interne régnant dans l'agencement de pressage (3).

7. Procédé selon la revendication 2, **caractérisé en ce que**
la vitesse de rotation inférieure (14) de la courbe caractéristique de torque (7a, 7b) adopte, sur la base de la pression interne régnant dans l'agencement de pressage (3), une vitesse de rotation variable (17) entre la première vitesse de rotation (10) et la deuxième vitesse de rotation (12).

8. Procédé selon l'une des revendications précédentes, **caractérisé en ce que**
pour la vitesse de rotation inférieure (14) de la courbe caractéristique de torque (7a, 7b), une vitesse de rotation initiale (18) est prédéterminée.

9. Procédé selon la revendication 2, **caractérisé en ce que**
la première pression interne (9), la deuxième pression interne (11), le premier torque (13) et/ou le deuxième torque (15) est prédéterminé, en particulier manuellement,
la première pression interne (9) étant de préférence inférieure à la deuxième pression interne (11) et/ou le premier torque (13) étant inférieur au deuxième torque (15).

10. Procédé selon l'une des revendications 2 ou 9, **caractérisé en ce que** au moins l'une des vitesses de rotation, torques et/ou pressions internes suivantes est prédéterminée :
- première vitesse de rotation (10) de 0,01 1/min à 10,00 1/min, de préférence de 0,05 1/min à 2,00 1/min ;
- deuxième vitesse de rotation (12) de 0,1 1/min à 20,0 1/min, de préférence de 0,2 1/min à 5,0 1/min ;
- vitesse de rotation initiale (18) de la vitesse de rotation inférieure (14) de 0,01 1/min à 10,00 1/min, de préférence de 0,05 1/min à 2,00 1/min
- vitesse de rotation supérieure (16) de 0,1 1/min à 20,0 1/min, de préférence de 0,2 1/min à 5,0 1/min ;
- premier torque (13) de 0 Nm à 15 Nm, de préférence de 0 Nm à 10 Nm ;
- deuxième torque (15) de 1 Nm à 30 Nm, de préférence de 1 Nm à 20 Nm ;
- première pression interne (9) de 1 mbar à 500 mbar, de préférence de 1 mbar à 300 mbar, et/ou
- deuxième pression interne (11) de 1 mbar à 1500 mbar, de préférence de 1 mbar à 600 mbar.

11. Procédé selon l'une des revendications précédentes, **caractérisé en ce que**
lors de régler la vitesse de rotation de l'arbre à vis sans fin (4) sur la base du torque, un amortissement de torque (19) et/ou
sur la base de la pression interne, un amortissement de pression interne (20) amortit la variation de vitesse de rotation.

12. Dispositif (1) pour déshydrater et compacter une matière à presser (2), en particulier une boue, une matière à râper ou une matière à tamiser,
- comprenant un agencement de pressage (3) à l'aide duquel la matière à presser (2) est soumise à un processus de pressage lors du fonctionnement du dispositif (1),
dans lequel une pression interne est générée à l'intérieur de l'agencement de pressage (3) à l'aide d'un arbre à vis sans fin (4) rotatif et un liquide (6) présent dans la matière à presser (2) est ainsi expulsé de la matière à presser (2),
- comprenant un moteur d'entraînement (5) à l'aide duquel un torque est transmis à l'arbre à vis sans fin (4), et
- comprenant au moins un dispositif de mesure (25),
le torque et la vitesse de rotation étant détectés par le biais du moteur d'entraînement (5) et/ou par le biais du dispositif de mesure (25) et la pression interne étant détectée par le biais du dispositif de mesure (25), et
- comprenant une unité de régulation (21) qui présente un régulateur de torque (22) pour réguler la vitesse de rotation de l'arbre à vis sans fin (4) sur la base du torque le long d'une courbe caractéristique de torque (7a, 7b) et/ou
comprenant un régulateur de pression (23) pour réguler la vitesse de rotation de l'arbre à vis sans fin (4) sur la base de la pression interne le long d'une courbe caractéristique de pression (8),
**caractérisé en ce que**
l'unité de régulation (21) est réalisée pour modifier la courbe caractéristique de torque (7a, 7b) sur la base de la pression interne et/ou la courbe caractéristique de pression (8) sur la base du torque.

13. Dispositif (1) selon la revendication précédente, **caractérisé en ce que** l'unité de régulation (21) est réalisée pour faire fonctionner le dispositif (1) selon l'une quelconque des revendications 1 à 11.

14. Dispositif (1) selon la revendication 12 ou 13, **caractérisé en ce que** le dispositif (1) et/ou l'unité de régulation (21) présente au moins un dispositif de prédétermination (24) pour prédéterminer une première vitesse de rotation (10), une deuxième vitesse de rotation (12), une vitesse de rotation inférieure (14), une vitesse de rotation supérieure (16), une première pression interne (9), une deuxième pression interne (11), un premier torque (13) et/ou un deuxième torque (15).
